# EUROPÄISCHE PATENTSCHRIFT

(11) **EP 2 091 851 B1**
(45) Veröffentlichungstag und Bekanntmachung des Hinweises auf die Patenterteilung: **07.04.2010**
(21) Anmeldenummer: 07819828.0
(22) Anmeldetag: 15.11.2007
(51) Int. Cl.: B65G 39/073, B65G 45/22

(54) **FÖRDERROLLE MIT REINIGUNGSFUNKTION**
CONVEYOR ROLLER HAVING A CLEANING FUNCTION
ROULEAU DE TRANSPORT AVEC FONCTION DE NETTOYAGE

(30) Priorität: 20.11.2006 DE 102006054575
(43) Veröffentlichungstag der Anmeldung: 26.08.2009
(73) Patentinhaber: Interroll Holding AG, 6592 Sant 'Antonino (CH)
(72) Erfinder: EIGENFELD, Udo, 41836 Hückelhoven (DE)
(74) Vertreter: Müller-Boré & Partner Patentanwälte
(86) Internationale Anmeldenummer: PCT/EP2007/009888
(87) Internationale Veröffentlichungsnummer: WO 2008/061667

(56) Entgegenhaltungen:
- EP-A- 1 657 357
- DE-A-102006 004 421
- DE-A1- 3 840 951
- US-A- 3 583 555
- US-B1- 6 367 613

## Beschreibung

### Gebiet der Erfindung

Die Erfindung bezieht sich auf eine Förderrolle gemäß dem Oberbegriff des Anspruchs 1, wie er aus der US 6,367,613 B1 bekannt ist, sowie einen Gurtförderer.

### Hintergrund der Erfindung und Sand der Technik

Es existieren verschiedene Förderanlagen, auf denen das Fördergut auf Förderrollen oder Förderbändern transportiert wird, die von Förderrollen gestützt werden. Zum Teil sind solche Förderrollen angetrieben.

Derartige Förderanlagen werden auch in Bereichen verwendet, in denen hohe Anforderungen an die Hygiene gestellt wird, wie z.B. der Lebensmittelindustrie. Teile der Förderanlage müssen z.T. nach jeder Schicht gereinigt werden.

Die US 6,367,613 B1 offenbart ein Endlosförderband mit einem Zahnrad mit einer Vielzahl von Fluidauslasskanälen, die radial zwischen dem Mittelpunkt des Zahrades und dessen äußerer Umfangsfläche angeordnet sind. Die Auslasskanäle sind über die Länge des Zahnrades entlang eines helischen Weges angeordnet und kommunizieren mit einem ringförmigen Fluidkanal, der sich in Längsrichtung über den Mittelbereich des Zahnrades erstreckt und mit einem Fluidzufluss verbunden ist. Über die Fluidkanäle kann Fluid radial nach außen gespritzt werden, um die Innenfläche des Endlosförderbandes von Verschmutzungen zu reinigen.

### Aufgabe

Es ist eine Aufgabe der Erfindung, eine Förderrolle und einen Gurtförderer bereitzustellen, die dazu beitragen, daß eine Förderanlage zuverlässig läuft und Teile der Förderanlage leicht zu reinigen sind.

### Lösung der Aufgabe

Die Aufgabe wird durch die Vorrichtungen gemäß den nebengeordneten Ansprüchen 1, 8 gelöst. Vorteilhafte Ausführungsformen sind in den Unteransprüchen offenbart.

Ein Aspekt der Erfindung betrifft eine Förderrolle, umfassend einen Trommelmantel, einen Fluidanschluß und zumindest ein erstes Befestigungselement zur Befestigung der Förderrolle in einem Förderrahmen, wobei der Trommelmantel ein Außenrohr aufweist, welches drehbar um das erste Befestigungselement gelagert ist, wobei das Außenrohr an seiner Umfangsfläche mehrere Fluidauslaßöffnungen aufweist und wobei der Fluidanschluß in Kommunikation mit den Fluidauslaßöffnungen steht. Eine solche Förderrolle hat den Vorteil, daß ein Reinigungsfluid über die Fluidauslaßöffnungen nach außen gespritzt werden kann und daß so ein um die Förderrolle oder ein an der Förderrolle vorbei laufendes Gurtband, das bevorzugt als Gliederkette ausgeführt ist, und/oder die Förderrolle gereinigt werden können.

Bei diesem Aspekt der Erfindung wird bei der Förderrolle ein Strömungsraum zwischen dem Außenrohr und einem zumindest abschnittsweise im Außenrohr angeordneten Innenrohr gebildet. Dadurch wird gewährleistet, daß innerhalb des Innenrohres ein Bereich geschaffen wird, der nicht von einem Fluid durchströmt wird. In einem solchen Innenraum können Elemente der Förderrolle untergebracht werden, die nicht in Berührung mit dem Fluid kommen sollen.

Dabei sind bei der Förderrolle das Außenrohr und das Innenrohr Bestandteile des Trommelmantels. Diese Konstruktion hat den Vorteil, daß Innenrohr und Außenrohr leicht abzudichten sind, da zwischen Innenrohr und Außenrohr keine Relativbewegung stattfindet. Ein solcher Trommelmantel ist leicht herzustellen und gewährleistet, daß sämtliche Fluidauslaßöffnungen an der Umfangsfläche des Trommelmantels gleichmäßig mit Reinigungsfluid versorgt werden können.

Ferner weist eine solche Förderrolle eine Gestaltung auf, bei welcher der Innenraum des Innenrohres von fluidführenden Bereichen fluiddicht getrennt ausgeführt ist. Auch diese Gestaltung hat den Vorteil, daß im Innenraum des Innenrohres Elemente der Förderrolle angeordnet werden können, die nicht in Berührung mit dem Reinigungsfluid kommen sollen.

Bevorzugt ist ferner eine solche Förderrolle, die eine Antriebseinheit aufweist, die innerhalb des Trommelmantels angeordnet ist, die mit dem ersten Befestigungselement drehfest verbunden ist und die mit dem Trommelmantel derart verbunden ist, daß der Trommelmantel um das erste Befestigungselement drehbar antreibbar ist. Eine solche Förderrolle weist den Vorteil auf, daß in einem Gurtförderer Förderrollen entsprechend der Erfindung nicht nur im Bereich der Umlenkrollen oder der Stützrollen angeordnet werden können, sondern auch als Antriebsrollen. Dies hat den Vorteil, daß in beiden Umlenkpunkten eine erfindungsgemäße Förderrolle vorgesehen werden kann. In diesen Bereichen, in denen ein großer Umschlingungswinkel des Gurtbandes um die Förderrolle gegeben ist, kann das Gurtband besonders effektiv gereinigt werden, da sich durch den großen Umschlingungswinkel ein größerer Bereich des Gurtbandes ergibt, der mit dem Reinigungsfluid bespritzt und somit gereinigt werden kann. Dies trifft insbesondere dann zu, wenn das Gurtband als Gliederkette ausgeführt ist oder das Gurtband Glieder aufweist. In diesem Fall verschwenken sich benachbarte Glieder im Umlenkbereich relativ zueinander, so daß durch diese Verschwenkung auch die Fugen zwischen den einzelnen Gliedern besser gereinigt werden können.

Eine weitere vorteilhafte Ausführungsform betrifft eine solche Förderrolle, die ferner im ersten Befestigungselement eine Kabeldurchführung für ein elektrisches Kabel aufweist, welches die Antriebseinheit mit Strom versorgt. Eine solche Ausführungsform hat den Vorteil, daß alle oder zumindest mehrere erforderliche Anschlüsse auf einer Seite der Förderrolle angeordnet werden können.

Weiterhin bevorzugt ist eine Gestaltung einer Förderrolle, bei der der Fluidanschluß am ersten Befestigungselement und/oder an einem zweiten Befestigungselement vorgesehen ist. Eine solche Gestaltung hat den Vorteil, daß der Durchmesser der Befestigungselemente reduziert werden kann, so daß solche Förderrollen insgesamt einen kleineren Durchmesser aufweisen können.

Ferner weist eine solche Förderrolle bevorzugt eine Gestaltung auf, die zwei voneinander getrennte Fluidanschlüsse aufweist. Im Fall, daß zwei Fluidansctilüsse vorgesehen werden, kann zum einen ein größerer Fluiddurchsatz erreicht werden, zum anderen wird hierdurch eine optimale dynamische Druckverteilung erreicht, so daß eine gleichmäßige Strahlbildung auf voller Rohrlänge gewährleistet werden kann. Ferner besteht die Möglichkeit, daß unterschiedliche Reinigungsfluide Verwendung finden. So kann z.B. durch einen Anschluß reines Wasser oder Wasser, das mit einem Reinigungsmittel versetzt ist, gepumpt werden und durch den anderen Anschluß ein Desinfektionsmittel. Denkbar ist auch, daß durch einen Anschluß reines Wasser gepumpt wird und durch den anderen Anschluß Reinigungsmittel. Bevorzugt ist ferner eine Ausführungsform, bei der die Anschlüsse mit einem Rückschlagventil versehen sind, so daß z.B. ein Desinfektionsmittel, welches durch den einen Anschluß gepumpt wird nicht durch den anderen Anschluß in den Wasserzulauf zurück gedrückt werden kann. Bei einer Gestaltung mit Rückschlagventilen wäre es auch möglich, über den einen Anschluß ein Reinigungsfluid zuzuführen, nach durchgeführter Reinigung den Zufluß des Reinigungsfluids zu stoppen und über den anderen Anschluß Druckluft einzublasen, so daß das Gurtband und die Förderrolle getrocknet werden.

Bevorzugt ist ferner eine Ausführungsform der Förderrolle, bei der der Trommelmantel Abstandselemente an seinem Umfang aufweist, die Auflagepunkte für ein von der Förderrolle zu stützendes Gurtband aufweisen, derart, daß eine Hüllkurve, die durch die Auflagepunkte definiert wird, beabstandet von einer Außenoberfläche des Außenrohrs verläuft. Solche Abstandselemente haben den Vorteil, daß das Gurtband in einen vorbestimmten Abstand um die Förderrolle umläuft, wodurch auch im Umschlingungsbereich Reinigungsfluid auf das Gurtband gespritzt werden kann.

Eine weitere vorteilhafte Ausführungsform bezieht sich auf eine solche Förderrolle, bei der die Abstandselemente als zahnkranzförmige Scheiben ausgebildet sind, deren Zähne sich vom Zahnkranz nach außen erstrecken.

Derartig gestaltete Scheiben haben den Vorteil, daß ein Gurtband, das bevorzugt als Gliederkette ausgeführt ist, nur über linienförmige oder punktförmige Auflagebereichen mit der Förderrolle in Kontakt kommt, so daß zwischen den Auflagebereichen das Gurtband bzw. die Gliederkette gut gereinigt werden kann.

Ein weiterer Aspekt der Erfindung bezieht sich auf einen Gurtförderer mit einer Förderrolle nach einem der Ansprüche 1 bis 7, der ein Gurtband aufweist, das von der Förderrolle gestützt wird. Ein solches Gurtband kann z.B. ein Textilband aufweisen, welches eine gummierte Oberfläche oder eine durch andere Oberflächenbehandlungen leicht zu reinigende Oberfläche aufweist. In Frage kommen auch andere Gurtbänder, wie z.B. Gliederketten oder Kombinationen von Gliederketten und Textilbändern. Bevorzugt sind Gurtbänder, welche aus modularen Kunststoffketten aufgebaut sind, wie sie z.B. von der Firma Intralox angeboten werden.

Ein solcher Gurtförderer weist bevorzugt eine Gestaltung auf, bei der die Förderrolle in einem Umlenkpunkt des Gurtbandes angeordnet ist. In einem Umlenkpunkt weist das Gurtband den größten Umschlingungswinkel um die Förderrolle auf, so daß über einen großen Umschlingungswinkel Reinigungsfluid auf das Gurtband aufgespritzt werden kann und so eine optimale Reinigungswirkung erzielt werden kann. Dies trifft insbesondere dann zu, wenn eine Gliederkette Anwendung findet. In diesem Fall verschwenken sich benachbarte Glieder im Umlenkbereich relativ zueinander und/oder es öffnen sich die Gliederscharniere, so daß durch diese Verschwenkung/Öffnung auch die Fugen zwischen den einzelnen Gliedern und/oder die Scharniere der Glieder besser gereinigt werden können.

Im Folgenden werden einzelne besonders bevorzugte Ausführungsformen der Erfindung beispielhaft beschrieben. Dabei weisen die einzelnen beschriebenen Ausführungsformen zum Teil Merkmale auf, die nicht zwingend erforderlich sind, um die vorliegende Erfindung auszuführen, die aber im Allgemeinen als bevorzugt angesehen werden. So sollen auch Ausführungsformen als unter die Lehre der Erfindung fallend offenbart angesehen werden, die nicht alle Merkmale der im Folgenden beschriebenen Ausführungsformen aufweisen. Genauso ist es denkbar, Merkmale, die in Bezug auf unterschiedliche Ausführungsformen beschrieben werden, selektiv miteinander zu kombinieren.

### Kurze Beschreibung der Zeichnungen

In den Figuren zeigt:
- Fig. 1: eine Seitenansicht einer Förderanlage 1 mit einer Förderrolle 5 in einem Förderrahmen 3 gemäß der Erfindung in einem Umlenkpunkt 2 eines Gurtbandes 4,
- Fig. 2: einen Querschnitt durch den Förderrahmen und die Förderrolle aus Figur 1 entlang einer Schnittebene, die in Fig. 1 mit J-J bezeichnet ist,
- Fig. 3: eine isometrische Ansicht einer Förderrolle gemäß der Erfindung, die in einem Förderrahmen angebracht ist, und
- Fig. 4: einen Querschnitt durch den Förderrahmen und die Förderrolle aus Figur 1 im Bereich des ersten Befestigungselements gemäß einer weiteren Ausführungsform.

### Detaillierte Beschreibung der Zeichnung

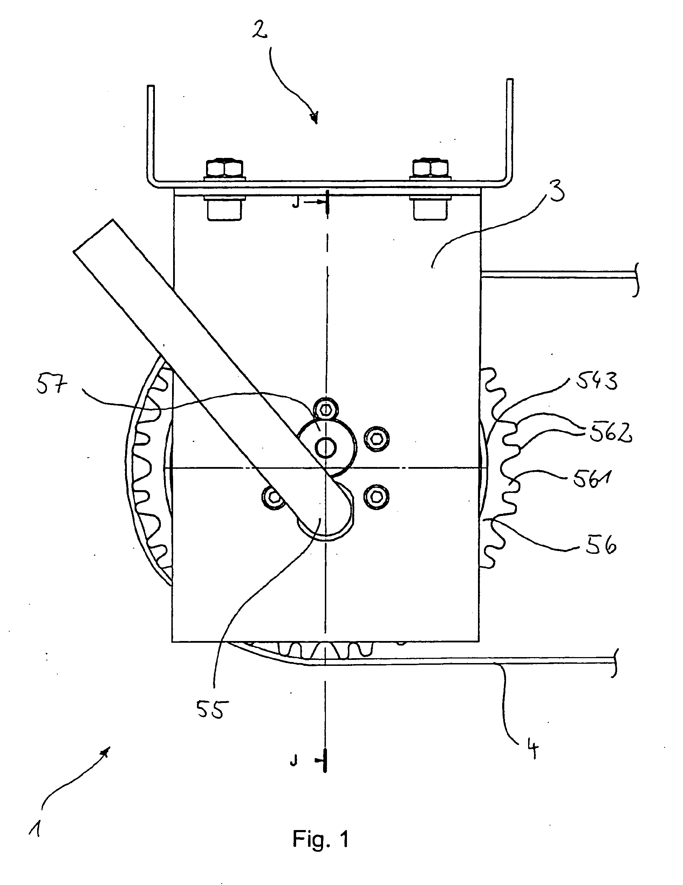

Figur 1 zeigt eine Seitenansicht einer Förderanlage 1 mit einer Förderrolle 5 in einem Förderrahmen 3 gemäß der Erfindung in einem Umlenkpunkt 2 eines Gurtbandes 4.

In der dargestellten Ansicht wird das auflaufende Trum des Gurtbandes 4 um 180° umgelenkt und läuft im wesentlichen parallel zu dem auflaufenden Trum wieder von der Förderrolle ab. Der Begriff Umlenkpunkt soll aber nicht auf diese Ausführung beschränkt sein, sondern umfaßt alle Gestaltungen, in denen die Laufrichtung des auflaufenden Trums sich von der Laufrichtung des ablaufenden Trums unterscheidet.

In Figur 1 ist die Seitenansicht der Förderrolle 5 dargestellt, auf der sowohl der Fluidanschluß 55 als auch die Kabeldurchführung 57 angeordnet sind. Auf den Fluidanschluß 55 ist ein Schlauch aufgesteckt, der die Förderrolle mit einem Reinigungsfluid, wie z.B. Wasser mit oder ohne Reinigungszusatz, oder einem anderen Fluid versorgt.

Neben dem Fluidanschluß 55 ist die Kabeldurchführung 57 angeordnet. In Figur 1 sind sowohl die Kabeldurchführung 57 als auch der Fluidanschluß 55 von einem elektrischen Kabel 58, beziehungsweise von einem Schlauch, der auf den Fluidanschluß 55 aufgesteckt ist, verdeckt. Das elektrische Kabel 58 ist über ein Steckerteil an einem korrespondierenden Steckerteil an der Seite der Förderrolle 5 angeschlossen. Der Fluidanschluß 55 weist in der dargestellten Ausführungsform ein separates stutzenförmiges Teil auf, welches in eine Fluidöffnung an der Stirnseite der Förderrolle 5 eingesteckt oder eingeschraubt ist. Wird dieses separate Teil abmontiert, steht an der Kontaktoberfläche des ersten Befestigungselements 52 in diesem Bereich kein Element des Fluidanschlusses 55 mehr über die Stirnfläche vor, so daß der Fluidanschluß eine Montage/Demontage der Förderrolle in den Förderrahmen bzw. aus dem Förderrahmen nicht behindert. Auch die Steckverbindung zwischen elektrischem Kabel 58 und Förderrolle 5 ist bevorzugt bündig mit der Oberfläche des ersten Befestigungselements 52 ausgestaltet, so daß die Förderrolle 5 bei abgezogenem Stecker leicht montiert/demontiert werden kann.

Die Anschlüsse im Bereich des zweiten Befestigungselements 53 sind bevorzugt genauso ausgestaltet.

Im Vergleich zu den Achsen von herkömmlichen Förderrollen oder Trommelmotoren ist bei der erfindungsgemäßen Förderrolle der Durchmesser der Befestigungselemente 52, 53 bevorzugt stark vergrößert, so daß bevorzugt sowohl die elektrischen Steckverbindungen als auch die Sacklöcher für die Verschraubung als auch der Fluidanschluß 55 an der Stirnfläche eines der Befestigungselemente 52, 53 vorgesehen werden kann. Dabei sind die Befestigungselemente 52, 53 so gestaltet, daß sie in Ihrer Längenausdehnung nur geringfügig über den Trommelmantel vorstehen. Bevorzugt beträgt der Überstand auf jeder Seite ein bis zwei Milimeter.

Ferner ist an der Stirnfläche eines oder beider Befestigungselement 52, 53 bevorzugt eine Nut für einen O-Ring vorgesehen, welche Verschraubungen und Anschlüsse umgibt. Ein in diese Nut eingelegter O-Ring dichtet das Befestigungselement gegenüber dem angrenzenden Förderrahmen ab, so daß ein Trockenbereich innerhalb der O-Ring Nut gebildet wird, der von dem Naßbereich auf der Seite des Trommelmantels getrennt ist. Der Trockenbereich weist bevorzugt den Anschlußbereich auf. Der Förderrahmen ist zumindest in diesem Bereich bevorzugt als glatte Blechwand ausgestaltet.

Neben der Kabeldurchführung 57 und dem Fluidanschluß 55 sind in Figur 1 ferner vier Innensechskantschrauben dargestellt, welche die Förderrolle 5 an dem Förderrahmen 3 befestigen.

Bei der dargestellten bevorzugten Ausführungsform weist die Förderrolle 5 mehrere Abstandselemente 56 auf, von denen eines in Figur 1 teilweise erkennbar ist. Das dargestellte Abstandselement ist ähnlich wie ein Zahnkranz ausgeführt und weist Zähne 561 auf, an deren radialen Enden jeweils Auflagepunkte 562 ausgebildet sind. Die Abstandselemente 56 sind auf eine Umfangsfläche 543 des Trommelmantels 54 aufgepreßt oder aufgeschoben und dort z.B. durch Schweißen fixiert. Bei einer bevorzugten Ausführungsform weist der Trommelmantel 54 an der Umfangsfläche 543 eine Paßfedernut auf, in die eine Paßfeder eingesetzt wird. Die Paßfeder greift in korrespondierende Nuten der Abstandselemente 56 ein, so daß ein Drehmoment vom Trommelmantel über die Abstandselemente 56 auf das Gurtband 4 übertragen werden kann. Die Paßfedernut kann sich über Abschnitte des Trommelmantels 54 erstrecken. Bevorzugt erstreckt sich die Paßfedernut über die gesamte Breite des Trommelmantels 54. Die Gestaltung der Drehmomentübertragung über die Paßfedernut, Paßfedern und korrespondierende Nuten der Abstandselemente 56 ermöglicht eine bevorzugte fliegende Lagerung der Abstandselemente, so daß unterschiedliche Ausdehnungskoeffizienten zwischen Förderrolle und Gurtband ausgeglichen werden können.

Das Gurtband 4 ist bevorzugt ein Textilband mit einer gummierten Oberfläche oder einer anderen Oberfläche, die eine einfache Reinigung ermöglicht. Ein solches Gurtband ist bevorzugt derart gestaltet, daß es ausreichend Festigkeit bereitstellt, so daß die Zähne 561 des Abstandselements 56 das Gurtband 4 nicht beschädigen. Sollten höhere Gurtspannungen aufgebracht werden, bei denen eine solche Widerstandsfähigkeit nicht mehr gewährleistet wäre, können anstelle der gezeigten Ausführungsform des Abstandselements 56 Abstandselemente Verwendung finden, die eine linienförmige oder flächige Auflagefläche bereitstellen, so daß die Flächenbelastung des Gurtbandes 4 reduziert wird.

Wenn anstelle des dargestellten Gurtbandes 4 z.B. eine Gliederkette Verwendung findet, können einzelne Gliederelemente in die Zwischenräume zwischen den Zähnen 561 des Abstandselements 56 eingreifen, so daß ein Formschluß zwischen Förderrolle 5 und Gliederkette geschaffen wird, um auch hohe Antriebskräfte über die Förderrolle 5 übertragen zu können. Modulare Kunststoffketten werden z.B. von der Firma Intralox angeboten.

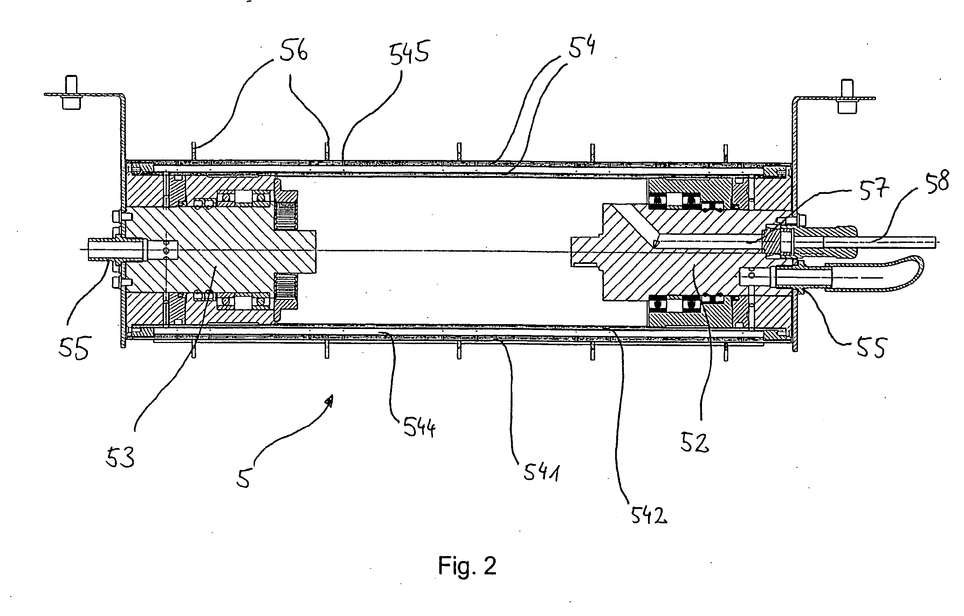

Figur 2 zeigt einen Querschnitt durch den Förderrahmen und die Förderrolle aus Figur 1 entlang einer Schnittebene, die in Figur 1 mit J-J bezeichnet ist.

Auf der rechten Seite der Förderrolle 5 ist ein erstes Befestigungselement 52 dargestellt. Dieses erste Befestigungselement 52 wird über die Schrauben, die in Bezug auf Figur 1 beschrieben wurden, drehfest im Förderrahmen 3 festgelegt bzw. befestigt. Auf der in der Figur 2 links dargestellten Seite ist ein zweites Befestigungselement 53 dargestellt, welches im Förderrahmen 3 ebenfalls drehfest festgelegt ist. Die beiden Befestigungselement dienen als Achse(n) der Förderrolle.

Bei einer Förderrolle mit einer innenliegenden Antriebseinheit kann das Drehmoment der Antriebseinheit über eines oder beide der Befestigungselemente am Förderrahmen abgestützt werden. Solche Antriebseinheiten können Elektromotoren, Hydraulikmotoren und/oder Getriebe aufweisen. Die dargestellte Förderrolle ist zur Aufnahme einer Antriebseinheit geeignet, die Antriebseinheit ist in den Figuren aber nicht dargestellt.

In der dargestellten Ausführungsform ist sowohl im ersten Befestigungselement 52 als auch im zweiten Befestigungselement 53 je ein Fluidanschluß 55 vorgesehen. Durch diese bevorzugte Gestaltung wird im Strömungsraum ein gleichmäßiger Fluiddruck erzeugt, was vor allem bei längeren Förderrollen vorteilhaft ist.

Auf den beiden Befestigungselementen 52, 53 ist ein Trommelmantel 54 drehbar gelagert. Der Trommelmantel weist in der dargestellten Ausführungsform bevorzugt ein Mantelrohr, das als Außenrohr 541 ausgebildet ist, und ein Trommelrohr, das als Innenrohr 542 ausgebildet ist, auf. Das Außenrohr 541 und das Innenrohr 542 sind an ihren axialen Enden bevorzugt über ein Ringelement abgedichtet, welches zugleich die beiden Rohre zueinander fixiert. Zwischen den beiden Rohren wird ein Strömungsraum 544 gebildet.

Der Trommelmantel 54 ist über verschiedene Zwischenelemente auf dem ersten und dem zweiten Befestigungselement 52, 53 drehbar gelagert. Hierzu sind zwischen den Zwischenelementen und den Befestigungselementen unter anderem Wälzlager und Dichtungen vorgesehen. Die Dichtungen gewährleisten, daß ein Reinigungsfluid, welches über die Fluidanschlüsse 55 und die Zwischenelemente in den Strömungsraum 544 gepumpt wird, nicht in den Innenraum im Innenrohr 542, der zwischen den beiden Befestigungselementen 52, 53 gebildet wird, gelangen kann. Diese Dichtungen sind bevorzugt Wellendichtringe oder Gleitringdichtungen. Diese Dichtungen sind ferner bevorzugt so ausgelegt, daß sie auch hohen Drücken widerstehen können.

Die Fluidanschlüsse sind bevorzugt als Sacklöcher in den Befestigungselementen ausgebildet. Von diesen Sacklöchern erstrecken sich Bohrungen auswärts in Richtung des Trommelmantels. Auch in den Zwischenelementen sind solche Bohrungen vorgesehen. Damit ein Reinigungsfluid kontinuierlich von den Bohrungen zumindest eines der Befestigungselemente in die Bohrungen des jeweils korrespondierenden Zwischenelements fließen kann, ist bevorzugt entweder an den Befestigungselementen 52, 53 und/oder an den Zwischenelementen eine bevorzugt umlaufende Nut vorgesehen, in welche die Bohrungen jeweils münden. So können die Bohrungen unabhängig von der Winkelstellung zwischen den Befestigungselementen und den Zwischenelementen miteinander kommunizieren.

Der Spalt, der zwischen den Befestigungselementen und den Zwischenelementen in Richtung des Förderrahmens 3 gelegen ist, kann ebenfalls abgedichtet werden. In der Regel wird dies nicht erforderlich sein, da es für eine Reinigungswirkung vorteilhaft ist, wenn das Reinigungsfluid auch durch diesen Spalt in axialer Richtung der Förderrolle 5 nach außen bis zum Förderrahmen 3 und dort in radialer Richtung zwischen Zwischenelement und Förderrahmen 3 nach außen gedrückt wird und so auch zu einer Reinigung dieser Flächen beiträgt. Daher ist es bevorzugt, wenn in diesen Bereichen keine Dichtung vorgesehen ist.

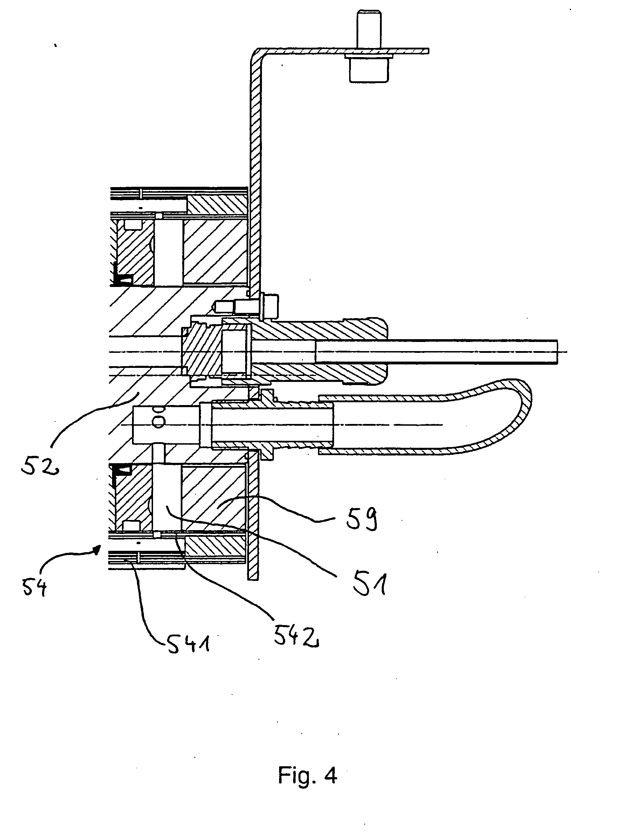

In Figur 4 ist eine weitere bevorzugte Ausführungsform gezeigt. Bei dieser dargestellten bevorzugten Ausführungsform gemäß der Erfindung ist zwischen dem ersten Befestigungselement 52 und dem Trommelmantel 54 ein Schiebeelement 59 vorgesehen. Dieses Schiebeelement 59 ist so gestaltet, daß dessen dem Trommelmantel 54 zugewandte Umfangsfläche und die Innenfläche des Trommelmantel, 54 einen Schiebesitz bilden, der für eine in Richtung der Trommelachse verschiebliche Aufnahme des Schiebeelements 59 im Trommelmantel 54 sorgt. Auf der dem ersten Befestigungselement zugewandten Innenseite des Schiebeelements wird zwischen dem Schiebeelement und dem ersten Befestigungselement ein Fluidspalt gebildet.

Das Schiebeelement 59 ist an seiner förderrahmenseitigen Stirnfläche bevorzugt mit einer im wesentlichen ebenen glatten Oberfläche versehen, so daß das Schiebeelement im wesentlichen flächig an der Oberfläche des Förderrahmens anliegen würde, wenn es bis zum Anschlag nach außen gedrückt würde.

Das Schiebeelement 59 ist bevorzugt aus einem ultrahochverdichteten Polyethylen hergestellt, bevorzugt aus PE 1000. Andere Materialien, die einen geringen Reibkoeffizienten aufweisen, können ebenfalls Verwendung finden.

Zwischen dem ersten Befestigungselement 52, dem Trommelmantel 54, den Zwischenelementen und dem Schiebelement 59 wird bei der in Fig. 4 gezeigten bevorzugten Ausführungsform eine ringförmige Strömungskammer 51 gebildet. Die Bohrungen, die sich im ersten Befestigungselement auswärts in Richtung des Trommelmantels erstrecken münden bevorzugt direkt in diese Strömungskammer 51. Die Strömungskammer 51 ist auf Seiten des Trommelmantels über Verbindungsöffnungen mit dem Strömungsraum 544 verbunden. Die Bohrungen und die Verbindungsöffnungen sind derart bemessen, daß durch das Fluid, welches im Reinigungsbetrieb durch die Bohrungen in die Strömungskammer 51 und von dieser durch die Verbindungsöffnungen in den Strömungsraum 544 strömt ein Staudruck erzeugt wird, der auf die dem Förderrahmen abgewandte Seite des Schiebelements 59 wirkt und dieses axial in Richtung des Förderrahmens drückt. Gleichzeitig strömt das Fluid durch den Spalt zwischen Schiebeelement 59 und erstem Befestigungselement 52 und durch den Zwischenraum zwischen Schiebeelement 59 und Förderrahmen nach außen. Dadurch stellt sich ein hydrodynamischer Spalt ein, durch welchen das Fluid mit großem Druck strömt, so daß die Fläche zwischen Förderrahmen und Schiebeelement gereinigt wird.

Dabei sind das Schiebeelement und die angrenzenden Teile bevorzugt so bemessen, daß sich im Reinigungsbetrieb eine größere Strömungsgeschwindigkeit des Fluids zwischen Schiebeelement 59 und Förderrahmen als in der Strömungskammer 51 einstellt. Dadurch wird bewirkt, daß der Fluiddruck auf Seiten der Strömungskammer 51 größer ist als zwischen Schiebeelement 59 und Förderrahmen, so daß das Schiebeelement 59 nach außen gedrückt wird.

Im Normalbetrieb (ohne Reinigungsmedium) bewirkt der geringe Reibkoeffizient zwischen Schiebeelement und Förderrahmen, daß nur minimaler Verschleiß am Schiebeelement auftritt.

Bevorzugt weist die Förderrolle auf der gegenüberliegenden Seite ebenfalls eine solche Gestaltung mit einem Schiebeelement auf.

In der in den Figuren dargestellten Ausführungsform ist im Bereich des zweiten Befestigungselements 53 auf der Seite des zweiten Befestigungselements 53, die in Richtung des ersten Befestigungselement 52 weist, ein Zahnkranz vorgesehen, der eine Innenverzahnung aufweist. Dieser Zahnkranz ist über eines der Zwischenelemente drehfest mit dem Trommelmantel 54 verbunden. Eine Antriebseinheit, die bevorzugt im Innenraum des Innenrohres 542 zwischen den beiden Befestigungselementen vorgesehen ist und in dieser Schnittansicht nicht bildlich dargestellt ist, kann über diesen Zahnkranz den Trommelmantel 54 antreiben. Dabei kann die Antriebseinheit über einen Achsstummel, welcher in der dargestellten Ausführungsform am ersten Befestigungselement 52 zum Innenraum hin vorgesehen ist, abgestützt werden. Wie dargestellt, ist an dem Achsstummel eine Nut vorgesehen, in den eine Paßfeder eingefügt werden kann. Denkbar sind auch andere Gestaltungen von Welle-Nabe-Verbindungen, über die ein Drehmoment übertragen werden kann.

Wie in der Zeichnung dargestellt ist, sind in dem Außenrohr 541 des Trommelmantels 54 feine Fluidauslaßöffnungen 545 vorgesehen, die im wesentlichen radial nach außen gerichtet sind. Über diese Fluidauslaßöffnungen 545 kann ein Reinigungsfluid, welches über den Fluidanschluß 55 durch die Befestigungselemente 52, 53 in die Zwischenelemente und in den Strömungsraum 544 gepumpt wird, austreten und auf das Gurtband 4 gespritzt wenden.

Dadurch, daß in der dargestellten Ausführungsform auf dem Trommelmantel 54 die Abstandselemente 56 vorgesehen sind, kann das Reinigungsfluid über den von den Abstandselementen 56 bereitgestellten Abstand zwischen Trommelmantel und Gurtband 4 auf das Gurtband 4 gespritzt werden, wodurch die Reinigungswirkung in diesem Bereich verbessert oder überhaupt erst ermöglicht wird.

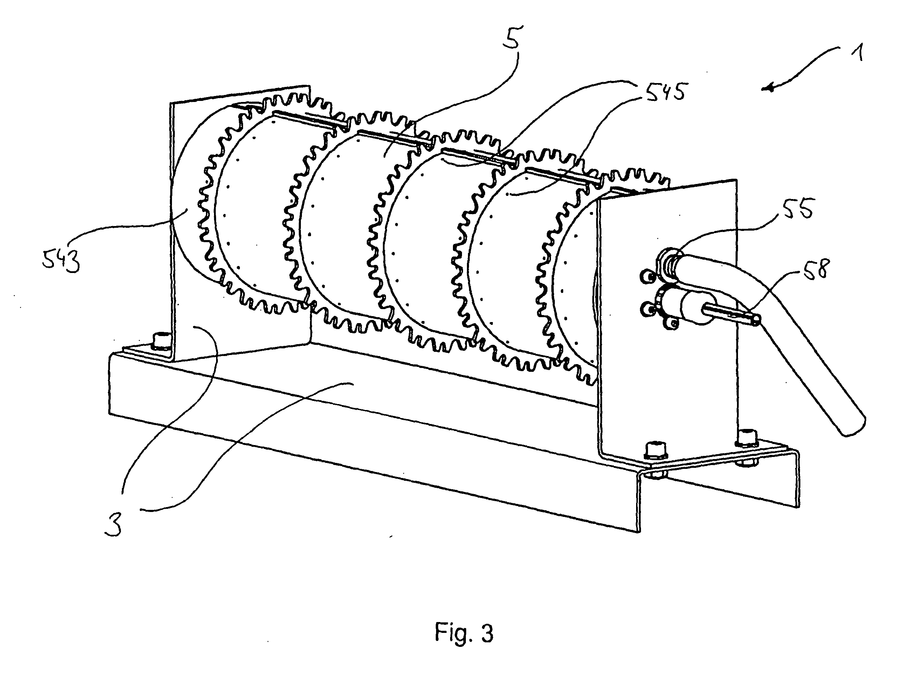

Figur 3 zeigt eine isometrische Ansicht einer Förderrolle gemäß der Erfindung, die in einem Förderrahmen angebracht ist.

Wie in dieser Figur ersichtlich ist, sind die Fluidauslaßöffnungen 545 in Reihen angeordnet, welche im wesentlichen parallel zu den Abstandselement 56 entlang einer gedachten Schnittkante zwischen einer Ebene, die senkrecht auf die Trommelachse der Förderrolle 5 steht, und der Außenfläche des Trommelmantels 54 verläuft.

In einer bevorzugten anderen Ausführungsform können die Fluidauslaßöffnungen 545 entlang einer oder entlang mehrerer, spiralförmiger, entlang der Außenfläche des Trommelmantels 54 verlaufender Linien angeordnet sein.

Bevorzugt ist ferner, wenn die Fluidauslaßöffnungen 545 nicht radial, sondern zumindest teilweise schräg zu einer Tangentialebene auf den Trommelmantel 54 stehen. Dadurch kann bewirkt werden, daß ein Fluidstrahl in einem schrägen Winkel auf das Gurtband 4 auftrifft, so daß ein in eine Richtung gerichteter Fluidstrom auf der Oberfläche des Gurtbandes 4 erzeugt wird, welcher die Reinigungswirkung weiter verbessern kann.

Beliebige andere Anordnungen der Fluidauslaßöffnungen sind ebenfalls denkbar.

### Bezugszeichenliste

- 1: Gurtförderer
- 2: Umlenkpunkt
- 3: Förderrahmen
- 4: Gurtband
- 5: Förderrolle
- 51: Strömungskammer
- 52: erstes Befestigungselement
- 53: zweites Befestigungselement
- 54: Trommelmantel
- 541: Außenrohr
- 542: Innenrohr
- 543: Umfangsfläche
- 544: Strömungsraum
- 545: Fluidauslaßöffnungen
- 55: Fluidanschluß
- 56: Abstandselement
- 561: Zahn
- 562: Auflagepunkt
- 57: Kabeldurchführung
- 58: elektrisches Kabel
- 59: Schiebeelement

## Patentansprüche

1. Förderrolle (5) umfassend einen Trommelmantel (54), einen Fluidanschluß (55) und zumindest ein erstes Befestigungselement (52) zur Befestigung der Förderrolle (5) in einem Förderrahmen (3),
wobei der Trommelmantel (54) ein Außenrohr (541) aufweist, welches drehbar um das erste Befestigungselement (52) gelagert ist,
wobei das Außenrohr (541) an seiner Umfangsfläche (543) mehrere Fluidauslaßöffnungen (545) aufweist und
wobei der Fluidanschluß (55) in Kommunikation mit den Fluidauslaßöffnungen (545) steht, **dadurch gekennzeichnet, dass** ein Strömungsraum (544) zwischen dem Außenrohr (541) und einem zumindest abschnittsweise im Außenrohr (541) angeordneten Innenrohr (542) gebildet wird, wobei Außenrohr (541) und Innenrohr (542) Bestandteile des Trommelmantels (54) sind und wobei der Innenraum des Innenrohres (542) von fluidführenden Bereichen fluiddicht getrennt ausgeführt ist.

2. Förderrolle (5) nach Anspruch 1, die ferner eine Antriebseinheit aufweist, die innerhalb des Trommelmantels (54) angeordnet ist, die mit dem ersten Befestigungselement (52) drehfest verbunden ist und die mit dem Trommelmantel (54) derart verbunden ist, daß der Trommelmantel (54) um das erste Befestigungselement (52) drehbar antreibbar ist.

3. Förderrolle (5) nach einem der vorstehenden Ansprüche, die ferner im ersten Befestigungselement (52) eine Kabeldurchführung (57) für ein elektrisches Kabel (58) aufweist, welches die Antriebseinheit mit Strom versorgt.

4. Förderrolle (5) nach einem der vorstehenden Ansprüche, wobei der Fluidanschluß (55) am ersten Befestigungselement (52) und/oder an einem zweiten Befestigungselement (53) vorgesehen ist.

5. Förderrolle (5) nach einem der vorstehenden Ansprüche, die zwei voneinander getrennte Fluidanschlüsse aufweist.

6. Förderrolle (5) nach einem der vorstehenden Ansprüche, wobei der Trommelmantel (54) Abstandselemente (56) an seinem Umfang aufweist, die Auflagepunkte (562) für ein von der Förderrolle (5) zu stützendes Gurtband (4) aufweisen, derart, daß eine Hüllkurve, die durch die Auflagepunkte (562) definiert wird, beabstandet von einer Außenoberfläche des Außenrohrs (541) verläuft.

7. Förderrolle (5) nach Anspruch 6, wobei die Abstandselemente (56) als zahnkranzförmige Scheiben ausgebildet sind, deren Zähne (561) sich vom Zahnkranz nach außen erstrecken.

8. Gurtförderer (1) mit einer Förderrolle (5) nach einem der vorstehenden Ansprüche, der ein Gurtband (4) aufweist, das von der Förderrolle (5) gestützt wird.

9. Gurtförderer nach Anspruch 8, wobei die Förderrolle (5) in einem Umlenkpunkt (2) des Gurtbandes (4) angeordnet ist.

## Claims

1. A conveyor roller (5) comprising a drum shell (54), a fluid connection (55) and at least a first fastening element (52) for fastening the conveyor roller (5) in a conveyor frame (3),
the drum shell (54) having an outer tube (541) which is rotatably supported about the first fastening element (52),
the outer tube (541) having a plurality of fluid-outlet openings (545) on its circumferential surface (543), and
the fluid connection (55) being in communication with the fluid-outlet openings (545), **characterized in that** a flow space (544) is formed between the outer tube (541) and an inner tube (542), which is arranged, at least in part, in the outer tube (541), the outer tube (541) and inner tube (542) being constituent parts of the drum shell (54) and the interior of the inner tube (542) being separated in a fluid-tight manner from fluid-channeling regions.

2. The conveyor roller (5) as claimed in claim 1, which also has a drive unit which is arranged within the drum shell (54), is connected in a rotationally fixed manner to the first fastening element (52) and is connected to the drum shell (54) such that the drum shell (54) can be driven in a rotatable manner about the first fastening element (52).

3. The conveyor roller (5) as claimed in one of the preceding claims, which also has, in the first fastening element (52), a cable lead-through (57) for an electric cable (58) which supplies the drive unit with power.

4. The conveyor roller (5) as claimed in one of the preceding claims, the fluid connection (55) being provided on the first fastening element (52) and/or on a second fastening element (53).

5. The conveyor roller (5) as claimed in one of the preceding claims, which has two mutually separate fluid connections.

6. The conveyor roller (5) as claimed in one of the preceding claims, the drum shell (54) having, on its circumference, spacer elements (56) which have bearing points (562) for a belt (4) to be supported by the conveyor roller (5), as a result of which an envelope which is defined by the bearing points (562) runs at a distance apart from an outer surface of the outer tube (541).

7. The conveyor roller (5) as claimed in claim 6, the spacer elements (56) being designed as toothed-ring-form disks of which the teeth (561) extend outward from the toothed ring.

8. A belt conveyor (1) which has a conveyor roller (5) as claimed in one of the preceding claims and has a belt (4) which is supported by the conveyor roller (5).

9. The belt conveyor as claimed in claim 8, the conveyor roller (5) being arranged at a point of deflection (2) of the belt (4).

## Revendications

1. Rouleau de convoyage (5) comportant une gaine de tambour (54), un raccord de fluide (55) et au moins un premier élément de fixation (52) afin de fixer le rouleau de convoyage (5) dans un cadre de convoyage (3),
dans lequel la gaine de tambour (54) présente un tube extérieur (541), lequel est monté avec faculté de rotation autour du premier élément de fixation (52),
dans lequel le tube extérieur (541) présente plusieurs ouvertures d'écoulement de liquide (545) sur sa surface circonférentielle (543) ; et
dans lequel le raccord de fluide (55) se trouve en communication avec les ouvertures d'écoulement de liquide (545), **caractérisé en ce qu'**un espace d'écoulement (544) est formé entre le tube extérieur (541) et un tube intérieur (542) agencé au moins par tronçons dans le tube extérieur (541), dans lequel le tube extérieur (541) et le tube intérieur (542) sont des composants de la gaine de tambour (54) et dans lequel l'espace intérieur du tube intérieur (542) est réalisé avec séparation étanche aux fluides des zones qui conduisent des fluides.

2. Rouleau de convoyage (5) qui présente de plus une unité d'entraînement, laquelle est agencée à l'intérieur de la gaine de tambour (54), laquelle est reliée de manière solidaire en rotation avec le premier élément de fixation (52) et laquelle est reliée avec la gaine de tambour (54) de telle sorte que la gaine de tambour (54) peut être entraîné en rotation autour du premier élément de fixation (52).

3. Rouleau de convoyage (5) selon l'une des revendications précédentes, qui, en outre, alimente en courant dans le premier élément de fixation (52) une traversée de câble (57) pour un câble électrique (58) qui alimente l'unité d'entraînement en courant.

4. Rouleau de convoyage (5) selon l'une des revendications précédentes, dans lequel le raccord de fluide (55) est prévu sur le premier élément de fixation (52) et/ou sur un second élément de fixation (53).

5. Rouleau de convoyage (5) selon l'une des revendications précédentes, qui présente deux raccords de fluide séparés l'un de l'autre.

6. Rouleau de convoyage (5) selon l'une des revendications précédentes, dans lequel la gaine de tambour (54) présente sur sa circonférence des éléments d'écartement (56) qui présentent des points d'appui (562) pour une bande à courroie (4) devant être soutenue par le rouleau de convoyage (5), de telle sorte qu'une courbe enveloppante qui est définie par les points d'appui (562), s'étend à distance d'une surface extérieure du tube extérieur (541).

7. Rouleau de convoyage (5) selon la revendication 6, dans lequel les éléments d'écartement (56) sont réalisés comme disques en forme couronne dentée dont les dents (561) s'étendent depuis la couronne dentée vers l'extérieur.

8. Convoyeur à courroie (1) comprenant un rouleau de convoyage (5) selon l'une des revendications précédentes et qui présente une bande à courroie (4) qui est soutenue par le rouleau de convoyage (5).

9. Convoyeur à courroie selon la revendication 8, dans lequel le rouleau de convoyage (5) est agencé dans un point de renvoi (2) de la bande à courroie (4).
